# EUROPÄISCHE PATENTSCHRIFT

(11) **EP 0 743 156 B1**
(45) Veröffentlichungstag und Bekanntmachung des Hinweises auf die Patenterteilung: **22.09.1999**
(21) Anmeldenummer: 96106702.2
(22) Anmeldetag: 27.04.1996
(51) Int. Cl.: B29C 45/17, B29C 33/30

(54) **Vorrichtung zum Zentrieren der Werkzeuge für Spritzgiessmaschinen**
Apparatus for centering the moulds for injection moulding machines
Dispositif pour centrer les moules pour machines à mouler par injection

(30) Priorität: 19.05.1995 DE 19518480
(43) Veröffentlichungstag der Anmeldung: 20.11.1996
(73) Patentinhaber: Krauss-Maffei Aktiengesellschaft, 80997 München (DE)
(72) Erfinder: Brams, Peter, 80935 München (DE); Lichtinger, Peter, 82256 Fürstenfeldbruck (DE)

(56) Entgegenhaltungen:
- EP-A- 0 324 901
- DE-A- 2 233 207
- DE-A- 3 333 607
- DE-A- 4 100 981
- DE-A- 4 115 957
- DE-C- 3 934 495
- US-A- 5 409 656
- PATENT ABSTRACTS OF JAPAN vol. 012, no. 087 (M-678), 19.März 1988 & JP 62 227715 A (TOYOTA MOTOR CORP), 6.Oktober 1987,

## Beschreibung

Die Erfindung bezieht sich auf eine Vorrichtung zum Zentrieren der Werkzeuge von Spritzgießmaschinen gemäß dem Oberbegriff des Patentanspruchs 1.

Aufgrund der im Maschinenbau üblichen Fertigungstoleranzen können sich Abweichungen der Zentrierungszentren der beiden gegenüberliegenden Aufspannplatten und damit ein Achsversatz der darauf aufgespannten Werkzeughälften ergeben. Insbesondere beim Einsatz von Drehtischen führt ein derartiger Achsversatz zu Unbrauchbarkeit bzw. Ausschußfertigung. Die beiden Werkzeughälften werden, wie allgemein üblich, gemeinsam zwischen die beiden Aufspannplatten eingebracht und zunächst die bewegliche Werkzeughälfte zusammen mit der festen Werkzeughälfte an der beweglichen Aufpannplatte bzw. am Drehtisch befestigt und zentriert, was in der Regel unproblematisch ist. Sodann wird die bewegliche Aufspannplatte mit der beweglichen und der festen Werkzeughälfte gegen die feste Aufspannplatte gefahren. Ist im Idealfall kein Achsversatz der beweglichen Einheit gegenüber der festen Aufspannplatte vorhanden, so gleitet der Zentrierring der festen Werkzeughälfte genau passend in den Zentrierring der zugehörigen festen Aufspannplatte hinein. In der gattungsbildenden EP 0 324 901 A2 ist eine derart bekannte Vorrichtung zum Zentrieren der Werkzeuge für Spritzgießmaschinen mit einer festen und einer beweglichen Aufspannplatte beschrieben. Die in den Werkzeug- hälften befestigten Zentrierringe gleiten im Idealfall genau passend in die Ausnehmungen der an den Aufspannplatten befestigten Zentrierplatten. Aufgrund von Fertigungs- und Montagetoleranzen ist aber in vielen Fällen ein mehr oder weniger großer Achsversatz gegeben, der beim Einfahren der festen Werkzeughälfte zu Beschädigungen der Zentrierringe führen oder im ungünstigen Fall eine Zentrierung verhindern kann. Um hier Abhilfe zu schaffen, muß der mit entsprechendem Spiel eingesetzte Zentrierring oft mehrmals vermessen, gelöst und wieder befestigt und arretiert werden, bis eine annähernd genaue Justierung erreicht werden kann. Oftmals ist es auch erforderlich, den Zentrierring abzuschleifen. Diese Maßnahmen sind umständlich und zeitaufwendig. Die einmal mühsam erreichte Justierung ist auch nicht reproduzierbar, so daß mit entsprechendem Aufwand nachjustiert werden muß.

Nach der Offenlegungsschrift DE 31 38 794 A1 ist eine Vorrichtung zum Justieren von Ober- und Unterteil eines Umform- und/oder Schneidwerkzeuges beim Einbau desselben in ein Führungsgestell oder in eine Presse unter Verwendung eines Lehrringes bekannt. Eine derartige Einrichtung ist für die Justierung von Werkzeugen an Spritzgießmaschinen nicht geeignet.

Nach der deutschen Auslegeschrift 22 33 207 ist eine Ausrichtvorrichtung für Formelemente von Werkzeugformen für ein Spritzgußwerkzeug bekannt, bei dem die Formhälften zueinander durch mehrere Führungsbolzen und durch drehverstellbar gelagerte Führungsbuchsen gegenseitig zentriert sind. Die Führungsbuchsen sind hierbei als Exzenterbuchsen mit einer exzentrischen Umfangsmantelfläche ausgebildet. Ausrichtvorrichtungen dieser Art sind aufwendig und umständlich in der Handhabung und für Aufspannplatten bzw. Werkzeuge für Spritzgießmaschinen mit Zentrierringen als Zentriervorrichtung ebenfalls nicht geeignet.

Der Erfindung liegt die Aufgabe zugrunde, bei einer Spritzgießmaschine mit einer festen und einer beweglichen Aufspannplatte mit jeweils einer zugehörigen Werkzeughälfte die Werkzeuge bzw. die Werkzeughälften auch dann genau, definierbar und reproduzierbar justieren und zentrieren zu können, wenn zwischen den Aufspannplatten und damit den darauf befestigten Werkzeughälften ein Achsversatz vorliegt, d.h. die Achsen der Werkzeughälften also nicht genau fluchten.

Diese Aufgabe wird gemäß den Merkmalen des Patentanspruchs 1 gelöst. Durch gegenseitiges Verdrehen von Außen- und Innenring kann erfindungsgemäß das Zentrum des Innenrings im Koordinatensystem verstellt und mit dem Zentrum des korrespondierenden Zentrierrings in Übereinstimmung gebracht werden. Auf diese Weise kann ein bestehender Versatz der Achsen der beiden Werkzeughälften bzw. Aufspannplatten schnell und präzise beseitigt werden.

Durch den Form- und Kraftschluß des Zentrierringsystems können zwischen der Aufspannplatte und dem Werkzeug auftretende Querkräfte in allen Richtungen ohne Beschädigung (Lochleibung) sicher aufgenommen werden.

Die weiteren Ansprüche beziehen sich auf vorteilhafte Ausgestaltungen der Erfindung.

In der Zeichnung sind Ausführungsbeispiele der Erfindung dargestellt. Es zeigen:
- Fig. 1: eine Werkzeuganordnung mit einer Zentrierung in bekannter Bauart,
- Fig. 2: eine Werkzeuganordnung entsprechend Fig. 1, jedoch mit einer Zentriervorrichtung gemäß der Erfindung,
- Fig. 3: einen Zentrierring nach Fig. 2 im Querschnitt,
- Fig. 4: einen Zentrierring gemäß Fig. 3 in einer Draufsicht.

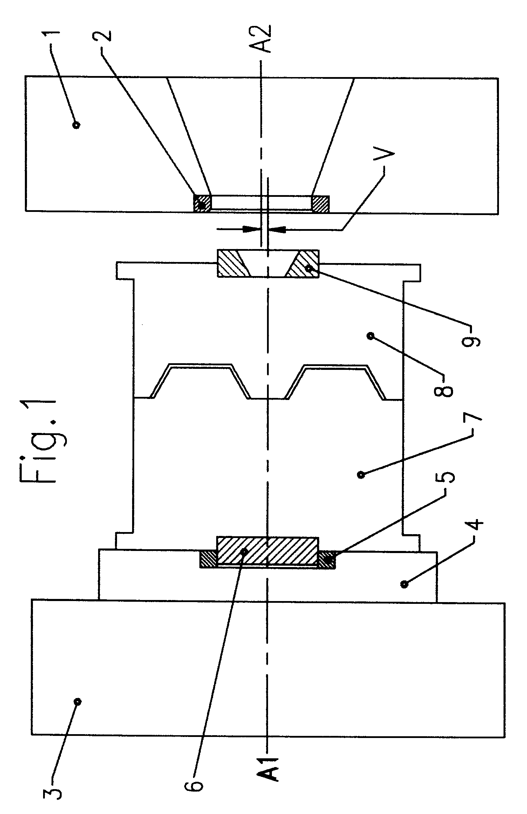

Gemäß Fig. 1 besteht eine bekannte Anordnung aus einer festen Aufspannplatte 1 mit einem Zentrierring 2 und einer beweglichen Aufspannplatte 3 mit einem Drehtisch 4, in den ein Zentrierring 5 eingesetzt ist. In den Zentrierring 5 ist ein Zentrierring 6 einer beweglichen Werkzeughälfte 7 eingepaßt. Eine feste Werkzeughälfte 8 ist mit einem Zentrierring 9 versehen, der mit dem Zentrierring 2 der festen Aufspannplatte 1 korrespondiert.

Zum Montieren der festen Werkzeughälfte 8 an der festen Aufspannplatte 1 wird die bewegliche Einheit 3,4,7 mit der festen Werkzeughälfte 8 gegen die feste Aufspannplatte 1 gefahren, so daß der Zentrierring 9 in den Zentrierring 2 hineingleitet, sofern kein Versatz V der beiden Achsen A1 und A2 vorhanden ist, wie in Fig. 1 dargestellt ist. Durch den Achsversatz kann eine Zentrierung erschwert oder unmöglich gemacht werden. Hier schafft die Erfindung Abhilfe, wie die folgenden Abbildungen zeigen.

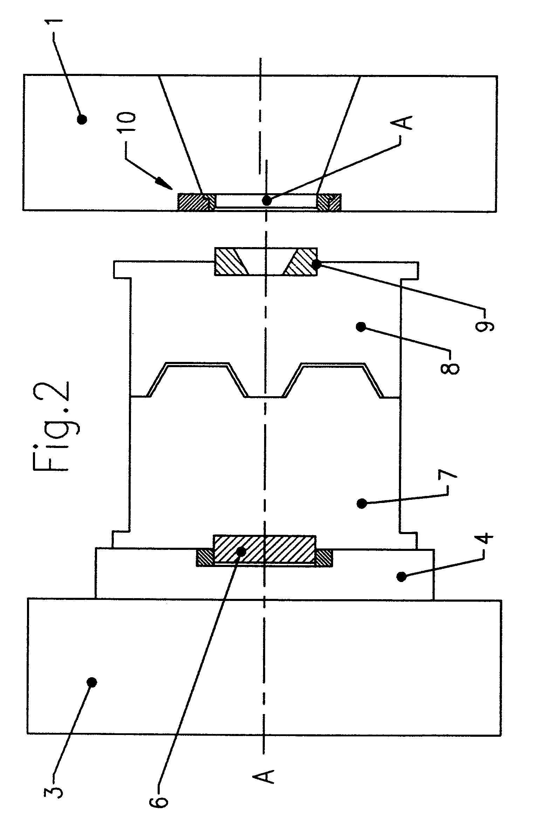

Fig. 2 entspricht Fig. 1 bis auf den Zentrierring 10, der den gleichen Innendurchmesser wie der Zentrierring 2 in Fig. 1 hat.

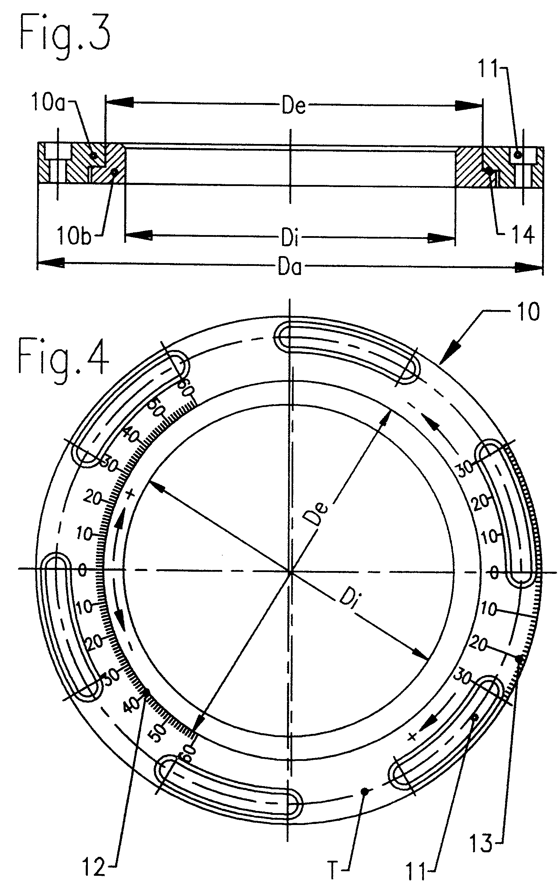

Gemäß Fig. 3 und 4 besteht der Zentrierring 10 aus einem Außenring 10a mit einem Außendurchmesser Da und einem Innenring 10b mit einem konzentrischen Innendurchmesser Di. Beiden Ringen gemeinsam ist ein exzentrischer Außen- bzw. Innendurchmesser De. Der Außenring ist auf einem Teilkreis T mit 6 Langlöchern 11 und an seinem Außen- und Innendurchmesser mit Winkelskalen 12 und 13 versehen.

Mittels einer nicht dargestellten Verschraubung wird der Außenring 10a gegen die feste Aufspannplatte 1 festgezogen, wobei der Innenring 10b mittels Vorspannung über einen Absatz bzw. Bund 14 festgehalten wird.

Nach Vermessen des Innendurchmessers Di mittels bekannter Meßvorrichtungen wie z.B. einer Meßuhr und Feststellen eines eventuellen Achsversatzes wird nun die Verschraubung gelöst und die beiden Ringe 10a und 10b mit Hilfe der Winkelskalen 12 und 13 so gegeneinander verdreht, daß kein Achsversatz mehr vorhanden ist bzw. gemäß Fig. 1 und 2 die Achsen A1 und A2 miteinander in einer gemeinsamen Achse A fluchten. Nach erfolgter Zentrierung wird diese mittels der Verschraubung fixiert.

## Patentansprüche

1. Vorrichtung zum Zentrieren der Werkzeuge für Spritzgießmaschinen mit einer festen und einer beweglichen Aufspannplatte mit jeweils einer zugehörigen Werkzeughälfte, wobei die jeweilige Werkzeughälfte einen Zentrierring aufweist, der in einen Zentrierring der Aufspannplatte eingreift, **dadurch gekennzeichnet,** daß einer der Zentrierringe (10) aus einem Außenring (10a) und einem Innenring (10b) besteht, wobei beide Ringe exzentrisch gegeneinander verdrehbar und arretierbar sind und in jeder Einstellung ein vollständiger Form- und Kraftschluß des gesamten Zentrierringsystems vorhanden ist.

2. Vorrichtung nach Anspruch 1, **dadurch gekennzeichnet,** daß das Zentrum des Innendurchmessers des Außenrings (10a) und des korrespondierenden Außendurchmessers (De) des Innenrings (10b) gegenüber dem Zentrum des Außendurchmessers (Da) des Außenrings (10a) und des Innendurchmessers (Di) des Innenrings (10b) um eine Exzentrizität (e) versetzt ist.

3. Vorrichtung nach Anspruch 1 und 2, **dadurch gekennzeichnet,** daß der Zentrierring (10) an der festen Aufspannplatte (1) angeordnet ist.

4. Vorrichtung nach den Ansprüchen 1 bis 3, **dadurch gekennzeichnet,** daß der Zentrierring (10) mit Winkelskalen (12,13) zur Einstellung des Außen- (10a) und Innenrings (10b) versehen ist.

5. Vorrichtung nach den Ansprüchen 1 bis 4, **dadurch gekennzeichnet,** daß der Außenring (10a) mittels Langlöchern (11) mit der festen Aufspannplatte (1) verschraubbar und der Innenring (10b) durch Vorspannung des Außenrings (10a) arretierbar ist.

## Claims

1. Device for centring the moulds for injection moulding machines with a fixed and a movable clamping plate respectively with an associated mould half, the respective mould half having a centring ring, characterised in that one of the centring rings (10) comprising an outer ring (10a) and an inner ring (10b), whereby both rings may be rotated eccentrically relative to one another and locked, and a complete positive and non-positive closure of the entire centring ring system is provided in each adjustment.

2. Device according to Claim 1, characterised in that the centre of the inside diameter of the outer ring (10a) and of the corresponding outside diameter (De) of the inner ring (10b) is displaced in relation to the centre of the outside diameter (Da) of the outer ring (10a) and of the inside diameter (Di) of the inner ring (10b) by an eccentricity value (e).

3. Device according to Claim 1 or 2, characterised in that the centring ring (10) is arranged on the fixed clamping plate (1).

4. Device according to Claims 1 to 3, characterised in that the centring ring (10) is provided with angle graduations (12, 13) for adjustment of the outer (10a) and inner ring (10b).

5. Device according to Claims 1 to 4, characterised in that the outer ring (10a) may be screwed to the fixed clamping plate (1) by means of elongated holes (11) and the inner ring (10b) may be locked by pre-stressing the outer ring (10a).

## Revendications

1. Dispositif pour centrer les moules pour machines à mouler par injection, comportant un plateau de bridage fixe et un plateau de bridage mobile, avec chacun une moitié de moule associée, dans lequel la moitié de moule en question présente une bague de centrage qui vient en prise dans une bague de centrage du plateau de bridage, caractérisé par le fait que l'une des bagues de centrage (10) est constituée d'une bague extérieure (10a) et d'une bague intérieure (10b), les deux bagues pouvant tourner excentriquement l'une par rapport à l'autre et se bloquer et une liaison complète, par complémentarité de forme et par serrage, de l'ensemble du système des bagues de centrage existant dans chaque position de réglage.

2. Dispositif selon la revendication 1, caractérisé par le fait que le centre du diamètre intérieur de la bague extérieur (10a) et du diamètre extérieur correspondant (De) de la bague intérieure (10b) est décalé d'une excentricité (e) par rapport au centre du diamètre extérieur (Da) de la bague extérieure (10a) et du diamètre intérieur (Di) de la bague intérieure (10b).

3. Dispositif selon la revendication 1 ou 2, disposé par le fait que la bague de centrage (10) est disposée sur le plateau de bridage fixe (1).

4. Dispositif selon les revendications 1 à 3, caractérisé par le fait que la bague de centrage (10) est munie de graduations angulaires (12, 13) pour le réglage de la bague extérieure (10a) et de la bague intérieure (10b).

5. Dispositif selon les revendications 1 à 4, caractérisé par le fait que la bague extérieure (10a) peut, au moyen de lumières (11), se visser avec le plateau de bridage fixe (1) et que la bague intérieure (10b) peut se bloquer par précontrainte de la bague extérieure (10a).
